# EUROPEAN PATENT APPLICATION

(11) **EP 4 741 237 A1**
(43) Date of publication of application: **13.05.2026**
(21) Application number: 25212219.7
(22) Date of filing: 30.10.2025
(51) Int. Cl.: B60T 13/74, F16D 55/227, F16D 65/00, F16D 65/095, F16D 65/18

(54) **ELECTRONIC MECHANICAL BRAKING CALIPER, BRAKING SYSTEM AND VEHICLE**

(30) Priority: 06.11.2024 CN 202411579318
(71) Applicant: Xiaomi EV Technology Co., Ltd., Beijing 100176 (CN)
(72) Inventor: YANG, Lei, Beijing, 100176 (CN); YANG, Deqiang, Beijing, 100176 (CN); XU, Jie, Beijing, 100176 (CN); LI, Weiwei, Beijing, 100176 (CN)
(74) Representative: Stöckeler, Ferdinand

(57) **Abstract**

The present invention provides an electronic mechanical braking caliper, a braking system and a vehicle. The electronic mechanical braking caliper includes a caliper body (1); a brake pad , and a driving module (3), where the driving module includes one driving portion (31), a transmission mechanism (32), a first speed reduction mechanism (33), a second speed reduction mechanism (34), a first piston assembly and a second piston assembly; the driving portion is in transmission connection with the first speed reduction mechanism and the second speed reduction mechanism through the transmission mechanism, the first speed reduction mechanism is in transmission connection with the first piston assembly, and the second speed reduction mechanism is in transmission connection with the second piston assembly; and the first piston assembly and the second piston assembly move in a first direction (A) to abut against the brake pad and drive the brake pad to move.

## Description

### TECHNICAL FIELD

The present invention relates to the technical field of braking, and in particular to an electronic mechanical braking caliper, a braking system and a vehicle.

### BACKGROUND OF THE INVENTION

A braking system of a vehicle is used to forcibly brake wheels to some extent by applying a braking force to the wheels. A braking control system functions to forcibly decelerate or even stop a traveling vehicle according to the requirements of a driver or a controller, or to stably park a stopped vehicle under various road conditions (for example, on a ramp), or to maintain speed stability of a vehicle traveling downhill.

Hydraulic braking is typically used in a traditional braking system, and a hydraulic system is costly with complex layout, slow response, low energy efficiency and high redundancy. In view of that, an electronic mechanical braking (EMB) system has emerged. It has a variety of characteristics including simple layout and rapid response, and can better satisfy the requirements of rapid development of automotive technology, especially the requirement of electrical automation development of automobiles.

However, a braking caliper of the EMB system typically has the problem of an insufficient braking capability in the related art.

### SUMMARY OF THE INVENTION

The present invention provides an electronic mechanical braking caliper, a braking system and a vehicle, so as to overcome defects in the related art.

A first aspect of the present invention provides an electronic mechanical braking caliper. The electronic mechanical braking caliper includes:
a caliper body;
a brake pad arranged on the caliper body; and
a driving module arranged on the caliper body,
   the driving module includes one driving portion, a transmission mechanism, a first speed reduction mechanism, a second speed reduction mechanism, a first piston assembly and a second piston assembly;
   the driving portion is in transmission connection with the first speed reduction mechanism and the second speed reduction mechanism through the transmission mechanism, the first speed reduction mechanism is in transmission connection with the first piston assembly, and the second speed reduction mechanism is in transmission connection with the second piston assembly; and
   the first piston assembly and the second piston assembly move in a first direction to abut against the brake pad and drive the brake pad to move.

Optionally, the driving module further includes a synchronization mechanism, and the synchronization mechanism is arranged between the first speed reduction mechanism and the second speed reduction mechanism in a transmitting manner.

Optionally, the transmission mechanism includes a first input gear, a first intermediate gear and a second intermediate gear,
the first input gear is in transmission connection with the driving portion, and the first intermediate gear and the second intermediate gear are in transmission connection with the first input gear; and
the first intermediate gear is in transmission connection with the first speed reduction mechanism, and the second intermediate gear is in transmission connection with the second speed reduction mechanism.

Optionally, the first speed reduction mechanism includes a first output gear and a first planetary gear assembly which are in transmission connection with each other, the first output gear is in transmission connection with the first intermediate gear, and the planetary gear assembly is in transmission connection with the first piston assembly; and/or
the second speed reduction mechanism includes a second output gear and a second planetary gear assembly which are in transmission connection with each other, the second output gear is in transmission connection with the second intermediate gear, and the second planetary gear assembly is in transmission connection with the second piston assembly.

Optionally, the first output gear and the second output gear have a diameter of a first size, and the first intermediate gear and the second intermediate gear have a diameter of a second size; the first size is greater than the second size.

Optionally, the first planetary gear assembly and/or the second planetary gear assembly include/includes a sun gear, a planetary gear, a ring gear and a planetary carrier; and
the sun gear is in transmission connection with the first output gear or the second output gear, the planetary gear is arranged on the planetary carrier and is in transmission connection with the sun gear, the ring gear is fixedly arranged and meshes with the planetary gear, and the planetary carrier is in transmission connection with the first piston assembly or the second piston assembly.

Optionally, the planetary carrier is configured as a disk plate, and the disk plate is rotatably arranged in the ring gear;
the disk plate includes a disk plate body and a planetary gear shaft, the planetary gear shaft is arranged on the disk plate body, and the planetary gear rotatably sleeves the planetary gear shaft; and
a gear hole is in a center of the disk plate, and the gear hole is in transmission connection with the first piston assembly or the second piston assembly.

Optionally, the caliper body is provided with a first beam body and a second beam body, the first beam body and the second beam body extend in the first direction and are spaced in a second direction, an accommodating recess is provided between the first beam body and the second beam body, and the driving portion is arranged in the accommodating recess;
a first piston cavity penetrated through in the first direction is provided inside the first beam body, the first piston assembly is arranged in the first piston cavity, a second piston cavity penetrated through in the first direction is provided inside the second beam body, and the second piston assembly is arranged in the second piston cavity; and
the first direction intersects with the second direction.

Optionally, the caliper body is further provided with a first hollow groove and a second hollow groove;
the first hollow groove is on one side of the first beam body farther away from the accommodating recess in the second direction, and the second hollow groove is on one side of the second beam body farther away from the accommodating recess in the second direction; and
the first beam body and the second beam body are symmetrically arranged in the second direction, and the first hollow groove and the second hollow groove are symmetrically arranged in the second direction.

Optionally, the first piston assembly and/or the second piston assembly include/includes a lead screw nut assembly, and the lead screw nut assembly includes a drive screw and a drive nut;
the drive screw extends in the first direction and is in transmission connection with the first speed reduction mechanism or the second speed reduction mechanism, and the drive screw is axially locked and is circumferentially rotatable; and
the drive nut is circumferentially locked and axially and movably sleeves the drive screw, and the drive nut is used to abut against the brake pad and drive the brake pad to move.

Optionally, the lead screw nut assembly further includes a piston sleeve, the piston sleeve is connected to the drive nut, and the piston sleeve is used to abut against the brake pad; and
the piston sleeve and the drive nut are integrally formed; or
the piston sleeve sleeves the drive nut, a first spherical surface is on an end surface of the drive nut, a second spherical surface is on an inner wall of the piston sleeve, and the first spherical surface is in spherical fit with the second spherical surface; or
the piston sleeve is on one side of the drive nut in the first direction, and the piston sleeve is connected to the drive nut through a spherical hinge.

Optionally, the drive screw includes a smooth rod section, a stop flange, a screw section and a connecting gear;
the smooth rod section and the screw section extend in the first direction, and the stop flange is connected between the smooth rod section and the screw section;
the drive nut sleeves the screw section, and is used to abut against the stop flange; and
the connecting gear is connected to one end of the smooth rod section farther away from the stop flange, and is used for transmission connection with the first speed reduction mechanism or the second speed reduction mechanism.

Optionally, the driving module further includes an adapter plate;
the adapter plate is arranged between the brake pad and the first piston assembly and the second piston assembly; and
an area in which the adapter plate abuts against the brake pad is a first area, a total area in which the first piston assembly and the second piston assembly abut against the adapter plate is a second area, and the first area is greater than the second area.

Optionally, the adapter plate includes a first side surface and a second side surface facing away from each other in the first direction, a first recess and a second recess are on the first side surface in a recessed manner, the first recess is used to allow the first piston assembly to be inserted, and the second recess is used to allow the second piston assembly to be inserted; and
the first side surface is fixedly connected to the first piston assembly and/or the second piston assembly, or the second side surface is fixedly connected to the brake pad.

Optionally, a first plane is at an end portion of a piston sleeve of the first piston assembly and/or the second piston assembly, a second plane is on an inner wall of the first recess and/or the second recess, and the first plane is used to abut against the second plane.

Optionally, a first cambered surface is at an end portion of a piston sleeve of the first piston assembly and/or the second piston assembly, a second cambered surface is formed on an inner wall of the first recess and/or the second recess, and the first cambered surface is used to abut against the second cambered surface.

Optionally, the driving module further includes a module housing, the module housing is detachably arranged on the caliper body, and the transmission mechanism, the first speed reduction mechanism and the second speed reduction mechanism are arranged in the module housing;
Optionally, a first piston cavity penetrated through in the first direction is provided inside the caliper body, and the first piston assembly is arranged in the first piston cavity;
a second piston cavity penetrated through in the first direction is provided inside the caliper body, and the second piston assembly is arranged in the second piston cavity;
an accommodating recess is provided in the caliper body in a recessed manner, and the driving portion is arranged in the accommodating recess; and
a first opening, a second opening and a third opening are in the module housing, the first opening is provided opposite the accommodating recess in the first direction, the second opening is provided opposite the first piston cavity in the first direction, and the third opening is provided opposite the second piston cavity in the first direction.

A second aspect of the present invention provides a braking system. The braking system includes the electronic mechanical braking caliper described in the first aspect.

A third aspect of the present invention provides a vehicle. The vehicle includes the electronic mechanical braking caliper described in the first aspect or the braking system described in the second aspect.

The technical solution according to the embodiments of the present invention can have the following beneficial effects: firstly, the first piston assembly and the second piston assembly can act on different positions of the brake pad to uniformly distribute a braking force and reduce wear of the brake pad, and can be adapted to the brake pad having a large area. Thus, a braking capability and braking efficiency of the electronic mechanical braking caliper are improved.

Secondly, motion of the first piston assembly and the second piston assembly can be precisely adjusted by arranging the first speed reduction mechanism and the second speed reduction mechanism. This means that a braking process can be smoother, vibration sensation of the vehicle during emergency braking is reduced, and driving comfort is improved.

Moreover, the risk of liquid leakage is reduced and reliability of braking and convenience of maintenance are improved through an electronic mechanical braking mode compared with a traditional hydraulic system.

It should be understood that the above general description and the following detailed description are illustrative and explanatory, and cannot limit the present invention.

### BRIEF DESCRIPTION OF DRAWINGS

The accompanying drawings here are incorporated in the description as a constituent part of the description, illustrate embodiments conforming to the present invention, and serve to explain the principles of the present invention together with the description.
FIG. 1 is a schematic diagram of a partial structure of an electronic mechanical braking caliper shown according to an example, where a module housing is not completely illustrated in the figure.
FIG. 2 is a schematic diagram of a partial structure of an electronic mechanical braking caliper shown according to an example, where a caliper body is not illustrated in the figure.
FIG. 3 is a schematic diagram of a three-dimensional structure of an electronic mechanical braking caliper shown according to an example.
FIG. 4 is a schematic diagram of a partial structure of an electronic mechanical braking caliper shown according to an example, where a schematic structural diagram of part of a planetary gear assembly and a piston assembly is illustrated in the figure.
FIG. 5 is a schematic structural diagram of an output gear and a sun gear of an electronic mechanical braking caliper shown according to an example.
FIG. 6 is a schematic structural diagram of a planetary carrier of a planetary gear assembly of an electronic mechanical braking caliper shown according to an example.
FIG. 7 is a schematic structural diagram of a lead screw nut assembly of an electronic mechanical braking caliper shown according to an example, where a piston sleeve is not illustrated in the figure.
FIG. 8 is a schematic structural diagram of a lead screw nut assembly of an electronic mechanical braking caliper shown according to an example, where a piston sleeve is illustrated in the figure.
FIG. 9 is a schematic structural diagram of a caliper body of an electronic mechanical braking caliper shown according to an example.
FIG. 10 is a schematic structural diagram of a module housing of an electronic mechanical braking caliper shown according to an example.
FIG. 11 is a schematic cutaway sketch of an electronic mechanical braking caliper shown according to an example, where a first plane and a second plane are illustrated in the figure.
FIG. 12 is a schematic diagram of partial structures of an adapter plate, a brake pad, a first piston assembly and a second piston assembly shown according to an example, where a first plane and a second plane are illustrated in the figure.
FIG. 13 is a schematic diagram of partial structures of an adapter plate, a brake pad, a first piston assembly and a second piston assembly shown according to an example, where a first cambered surface and a second cambered surface are illustrated in the figure.
FIG. 14 is a schematic structural sketch of an electronic mechanical braking caliper shown according to an example.

### DETAILED DESCRIPTION OF THE INVENTION

The examples will be described in detail here and are illustratively shown in the accompanying drawings. When the following description refers to the accompanying drawings, the same numbers in different accompanying drawings represent the same or similar elements unless otherwise indicated. The implementations described in the following examples do not denote all implementations consistent with the present invention. On the contrary, the implementations are merely examples of a device and a method consistent with some aspects of the present invention as detailed in the appended claims.

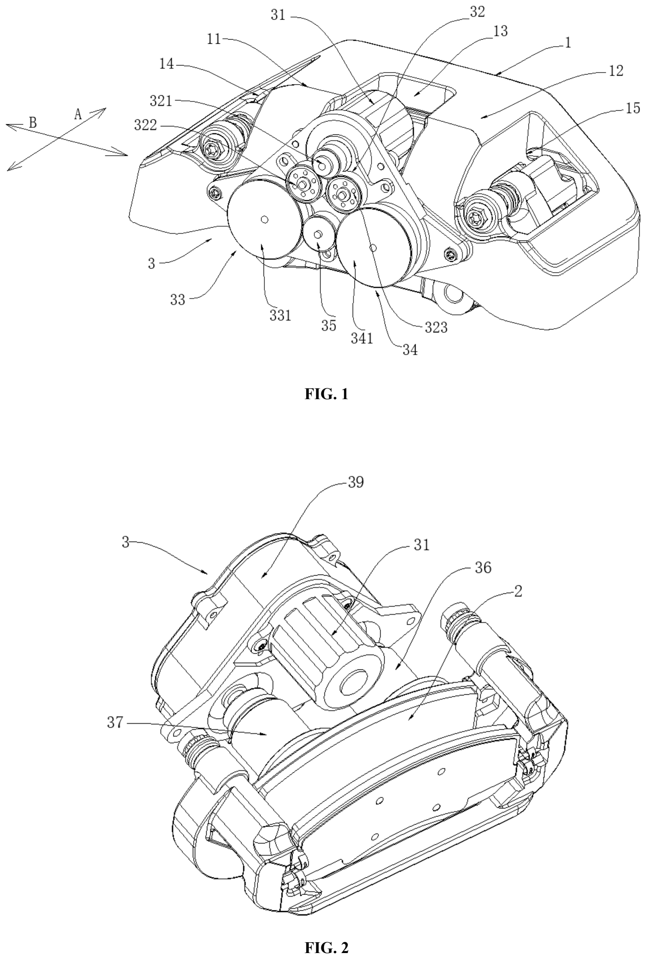

In the present invention, unless otherwise stated, directional words used, such as "inside and outside", refer to the inside and outside of specific structural contours; directional words used, such as "first direction and second direction", refer to two intersecting directions, and reference can be made to FIG. 1 for details; and the terms used, such as "first and second", are used to distinguish one element from another, and do not denote sequence or importance.

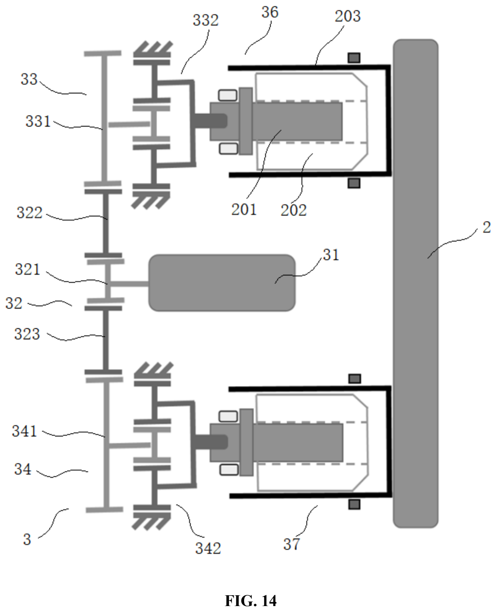

With reference to FIGs. 1-14, the present invention provides an electronic mechanical braking caliper. The electronic mechanical braking caliper includes a caliper body 1, a brake pad 2 and a driving module 3. The brake pad 2 arranged on the caliper body 1. The driving module 3 arranged on the caliper body 1. The driving module 3 includes one driving portion 31, a transmission mechanism 32, a first speed reduction mechanism 33, a second speed reduction mechanism 34, a first piston assembly 36 and a second piston assembly 37. The driving portion 31 is in transmission connection with the first speed reduction mechanism 33 and the second speed reduction mechanism 34 through the transmission mechanism 32, the first speed reduction mechanism 33 is in transmission connection with the first piston assembly 36, the second speed reduction mechanism 34 is in transmission connection with the second piston assembly 37, and the first piston assembly 36 and the second piston assembly 37 can move in a first direction A to abut against the brake pad 2 and drive the brake pad 2 to move.

In the above technical solution, firstly, the first piston assembly 36 and the second piston assembly 37 can act on different positions of the brake pad 2 to uniformly distribute a braking force and reduce wear of the brake pad 2, and can be adapted to the brake pad 2 having a large area. Thus, a braking capability and braking efficiency of the electronic mechanical braking caliper are improved.

Secondly, motion of the first piston assembly 36 and the second piston assembly 37 can be precisely adjusted by arranging the first speed reduction mechanism 33 and the second speed reduction mechanism 34. This means that a braking process can be smoother, vibration sensation of the vehicle during emergency braking is reduced, and driving comfort is improved.

Moreover, the risk of liquid leakage is reduced and reliability of braking and convenience of maintenance are improved through an electronic mechanical braking mode compared with a traditional hydraulic system.

Optionally, the driving portion 31 may be configured as a rotating motor, but a specific type of the driving portion 31 is not limited in the present invention.

Optionally, with reference to FIG. 1, the driving module 3 may further include a synchronization mechanism 35. The synchronization mechanism 35 is arranged between the first speed reduction mechanism 33 and the second speed reduction mechanism 34 in a transmitting manner. By arranging the synchronization mechanism 35 between the first speed reduction mechanism 33 and the second speed reduction mechanism 34, coordinated and synchronized operation between the first speed reduction mechanism 33 and the second speed reduction mechanism 34 can be effectively ensured. Further, actions of the first piston assembly 36 and the second piston assembly 37 can be more consistent. Thus, the phenomenon of wear of the brake pad 2 caused by a non-uniform force is prevented. A specific structure of the synchronization mechanism 35 is not limited in the present invention, and the synchronization mechanism 35 may be, for example, a synchronous belt or a synchronous gear.

In an implementation, with reference to FIG. 1, the transmission mechanism 32 includes a first input gear 321, a first intermediate gear 322 and a second intermediate gear 323. The first input gear 321 is in transmission connection with the driving portion 31. The first intermediate gear 322 and the second intermediate gear 323 are in transmission connection with the first input gear 321. The first intermediate gear 322 is in transmission connection with the first speed reduction mechanism 33, and the second intermediate gear 323 is in transmission connection with the second speed reduction mechanism 34.

In the implementation, firstly, efficient transmission from the driving portion 31 to the first speed reduction mechanism 33 and the second speed reduction mechanism 34 can be achieved by arranging the first input gear 321, the first intermediate gear 322 and the second intermediate gear 323. Gear transmission generally has high efficiency. This means that more driving energy can be directly transferred to the first piston assembly 36 and the second piston assembly 37. Thus, energy loss is reduced.

Secondly, the first input gear 321 distributes power to two different paths through meshing with the first intermediate gear 322 and the second intermediate gear 323, such that the first speed reduction mechanism 33 and the second speed reduction mechanism 34 can be simultaneously driven. Thus, it is ensured that the first piston assembly 36 and the second piston assembly 37 can collaboratively work to provide a balanced braking force.

Moreover, a gear transmission structure is relatively simple and compact, and it is easy to integrate the gear transmission structure into the caliper body 1. The gear transmission structure does not need a complex fluid control system, thus, complexity and weight of a system are reduced.

Optionally, with reference to FIGs. 1-4, the first speed reduction mechanism 33 includes a first output gear 331 and a first planetary gear assembly 332 which are in transmission connection with each other. The first output gear 331 is in transmission connection with the first intermediate gear 322, and the first planetary gear assembly 332 is in transmission connection with the first piston assembly 36.

Optionally, with reference to FIGs. 1-4, the second speed reduction mechanism 34 includes a second output gear 341 and a second planetary gear assembly 342 which are in transmission connection with each other. The second output gear 341 is in transmission connection with the second intermediate gear 323, and the second planetary gear assembly 342 is in transmission connection with the second piston assembly 37. The synchronization mechanism 35 includes a synchronous gear. The synchronous gear is arranged between the first output gear 331 and the second output gear 341 in a transmitting manner.

In the embodiments, the first planetary gear assembly 332 and the second planetary gear assembly 342 can achieve a large speed reduction ratio in small space through layout of planetary gears. Thus, space is saved, and high torque output can be further provided. Thus, a piston assembly can generate a sufficient braking force under small input torque. Moreover, a motion speed and position of the first piston assembly 36 can be controlled more accurately through a speed reduction design of the first output gear 331 and the first planetary gear assembly 332. Similarly, a similar speed reduction design may be used for the second speed reduction mechanism 34 to ensure controllability of the second piston assembly 37. Moreover, the synchronization mechanism 35 configured as the synchronous gear is arranged between the first output gear 331 and the second output gear 341. Thus, synchronous rotation between the first output gear 331 and the second output gear 341 is ensured. Further, the problem of the non-uniform braking force caused by non-synchronous motion of the first piston assembly 36 and the second piston assembly 37 can be avoided. Thus, braking stability and consistency are improved.

Moreover, with reference to FIG. 1, the first output gear 331 and the second output gear 341 have a diameter of a first size, and the first intermediate gear 322 and the second intermediate gear 323 have a diameter of a second size, where the first size is greater than the second size.

That is, the first intermediate gear 322 and the second intermediate gear 323 are configured as small gears, and the first output gear 331 and the second output gear 341 are configured as large gears. The large gear is driven through the small gear, and thus speed reduction and torque increase are achieved, and a braking effect is further improved.

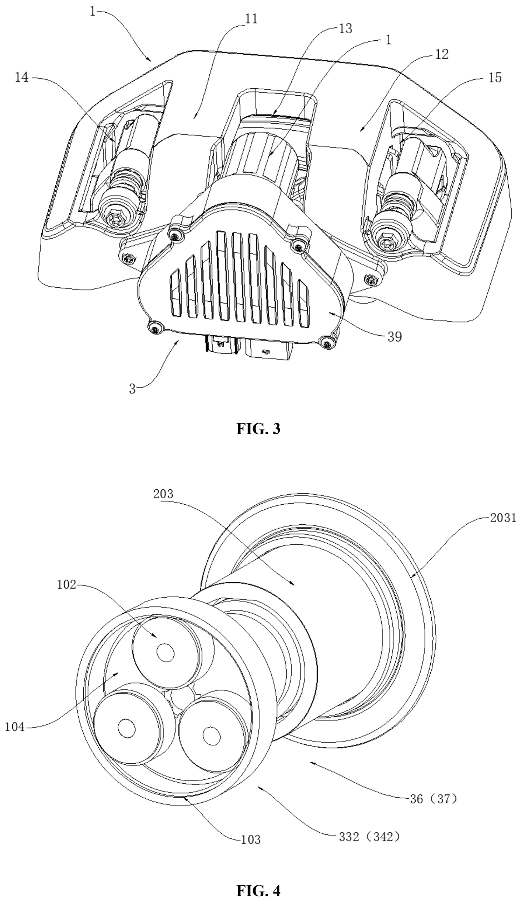

In an optional implementation, with reference to FIGs. 4-6, the first planetary gear assembly 332 and/or the second planetary gear assembly 342 include/includes a sun gear 101, a planetary gear 102, a ring gear 103 and a planetary carrier 104. The sun gear 101 is in transmission connection with the first output gear 331 or the second output gear 341, the planetary gear 102 is arranged on the planetary carrier 104 and is in transmission connection with the sun gear 101, the ring gear 103 is fixedly arranged and meshes with the planetary gear 102, and the planetary carrier 104 is used for transmission connection with the first piston assembly 36 or the second piston assembly 37.

In the implementation, a high speed reduction ratio can be achieved in relatively compact space through a combination of the sun gear 101, the planetary gear 102, the ring gear 103 and the planetary carrier 104. This means that even if an input rotating speed is high, a speed output to the piston assemblies can be effectively controlled. Thus, large torque output is provided, and a sufficient braking force is ensured. Moreover, a plurality of planetary gears 102 are designed to rotate around the sun gear 101. Thus, a load can be distributed more uniformly. When the planetary gear 102 meshes with the ring gear 103, it can be ensured that each planetary gear 102 participates in load sharing. Thus, a load carrying capability and durability are improved. Moreover, positions and speeds of the piston assemblies can be controlled more accurately through transmission of the planetary gear assembly. The planetary carrier 104 as a final output part can ensure that the piston assemblies move according to preset requirements. Thus, an accurate braking effect is achieved. However, a specific structural design of the first planetary gear assembly 332 and/or the second planetary gear assembly 342 is not limited in the present invention.

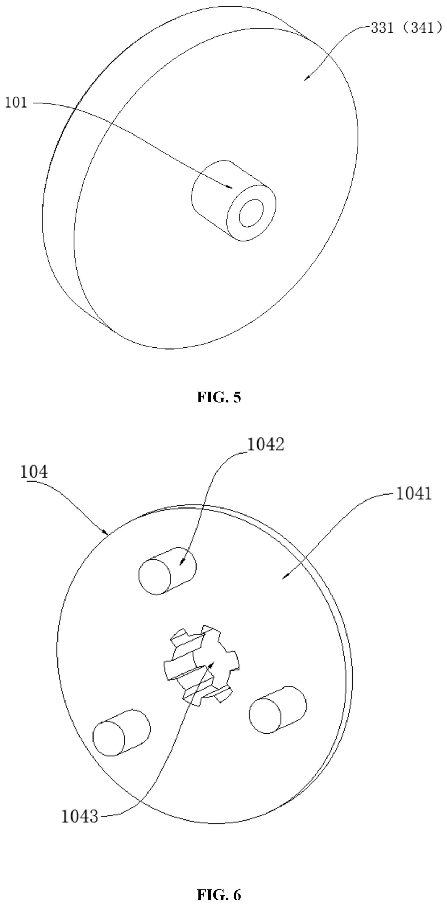

Moreover, it should be noted that in some schematic diagrams, for example, as shown in FIG. 5, output gears and the sun gear are simply illustrated in the present invention, and tooth structures of the corresponding gears are not completely illustrated.

With reference to FIG. 6, the planetary carrier 104 is configured as a disk plate, and the disk plate is rotatably arranged in the ring gear 103. The disk plate includes a disk plate body 1041 and a planetary gear shaft 1042, the planetary gear shaft 1042 is arranged on the disk plate body 1041, and the planetary gear 102 rotatably sleeves the planetary gear shaft 1042. A gear hole 1043 is formed in a center of the disk plate, and the gear hole 1043 is used for transmission connection with the first piston assembly 36 or the second piston assembly 37.

The planetary carrier 104 is configured as the disk plate. Higher rigidity and stability are provided through such a design. The disk plate body 1041 may ensure stability of the planetary gear 102 during rotation and reduce vibration and noise as a supporting platform for the planetary gear 102.

The planetary gear shaft 1042 is arranged on the disk plate body 1041, and the planetary gear 102 rotatably sleeves the planetary gear shaft 1042. Friction between the planetary gear 102 and the planetary carrier 104 can be reduced through such a design. Thus, wear is reduced, and service life is prolonged.

The disk plate is rotatably arranged in the ring gear 103. This means that the disk plate can freely rotate without being limited by the ring gear. With such a design, a mounting process is simplified, and subsequent inspection and maintenance are further convenient.

Moreover, the gear hole 1043 formed in the center of the disk plate is used for transmission connection with the first piston assembly 36 or the second piston assembly 37. Such a design can ensure that motion of the planetary carrier 104 can be accurately transmitted to the piston assemblies. Thus, accurate braking control is achieved. Moreover, the planetary carrier 104 is directly connected to the piston assemblies through the gear hole 1043. Thus, intermediate links are reduced, and a response speed of braking is increased. This means that response to operation of a driver can be more rapid, and driving safety is improved.

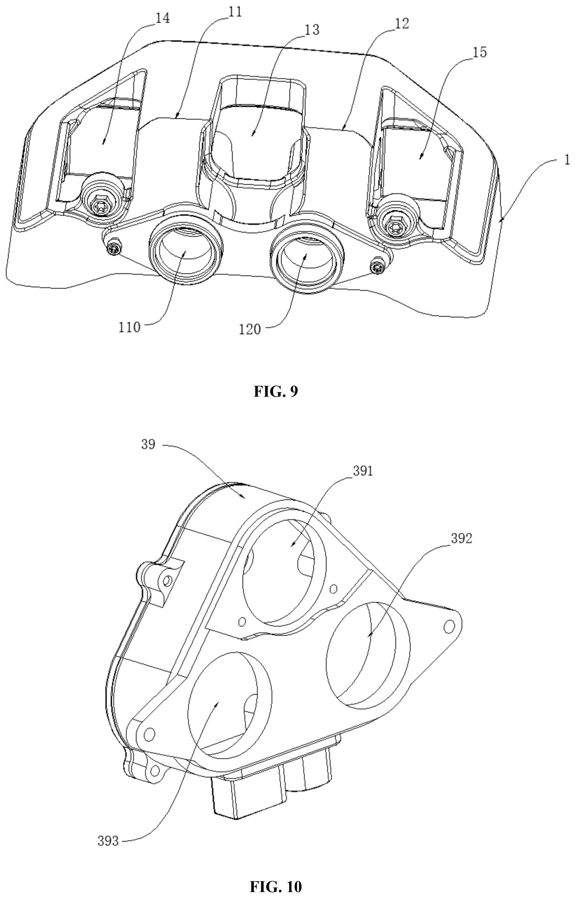

Optionally, with reference to FIG. 9, the caliper body 1 is provided with a first beam body 11 and a second beam body 12, the first beam body 11 and the second beam body 12 extend in the first direction A and are spaced in a second direction B, an accommodating recess 13 is provided between the first beam body 11 and the second beam body 12, and the driving portion 31 is arranged in the accommodating recess 13. A first piston cavity 110 penetrated through in the first direction A is provided inside the first beam body 11, the first piston assembly 36 is arranged in the first piston cavity 110. A second piston cavity 120 penetrated through in the first direction A is provided inside the second beam body 12, and the second piston assembly 37 is arranged in the second piston cavity 120. The first direction A intersects with the second direction B.

In the implementation, firstly, an overall structure of the caliper is more stable through a double-beam design of the first beam body 11 and the second beam body 12. Thus, deformation resistance is enhanced. Secondly, piston cavities are provided inside the first beam body 11 and the second beam body 12 respectively, and the piston assembly is arranged in each cavity. Thus, consistency of piston actions on two sides can be ensured, and operation reliability and stability of the caliper are improved. Moreover, the accommodating recess 13 is provided between the first beam body 11 and the second beam body 12, and the driving portion 31 is mounted in the accommodating recess 13. Thus, space is saved, and an external structure is simplified, such that the caliper is easy to mount and use. In addition, it is convenient to replace or maintain the piston assemblies through an independent piston cavity design, as there is no need to dismount an entire device. Moreover, the caliper body 1 may be formed through integral forming, such as nodular cast iron or aluminum alloy integral forming, which is not limited in the present invention.

Optionally, with reference to FIG. 9, the caliper body 1 is further provided with a first hollow groove 14 and a second hollow groove 15. The first hollow groove 14 is provided on one side of the first beam body 11 farther away from the accommodating recess 13 in the second direction B, and the second hollow groove 15 is provided on one side of the second beam body 12 farther away from the accommodating recess 13 in the second direction B. The first beam body 11 and the second beam body 12 are symmetrically arranged in the second direction B, and the first hollow groove 14 and the second hollow groove 15 are symmetrically provided in the second direction B.

A lightweight effect of the caliper body 1 is improved by providing the first hollow groove 14 and the second hollow groove 15, overall weight of the caliper body 1 is reduced by removing a material of a non-bearing part, and strength of the caliper body 1 is ensured while material utilization is improved. In addition, a symmetrical design can not only be beautiful, but also ensure that stress distribution on two sides is uniform when an external force is born. Thus, distortion or deformation of the caliper body 1 caused by an asymmetrical design is prevented, and stability and reliability of the caliper body 1 are improved.

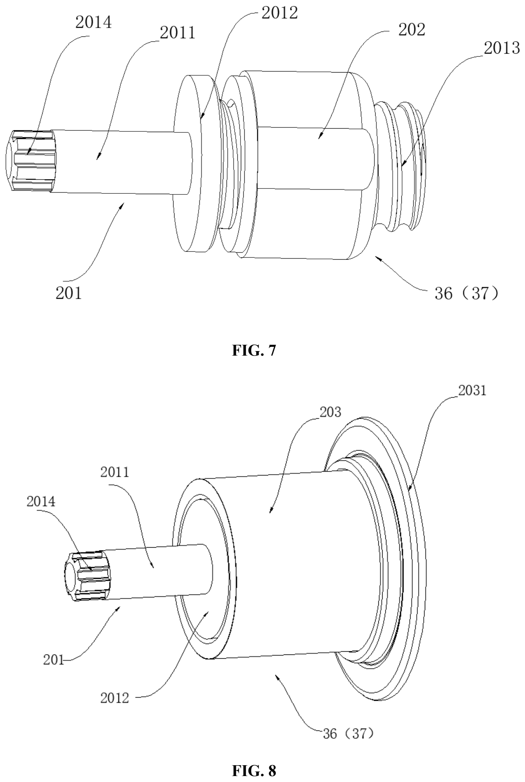

In some implementations, with reference to FIGs. 7, 8 and 13, the first piston assembly 36 and/or the second piston assembly 37 include/includes a lead screw nut assembly. The lead screw nut assembly includes a drive screw 201 and a drive nut 202. The drive screw 201 extends in the first direction A and is in transmission connection with the first speed reduction mechanism 33 or the second speed reduction mechanism 34; the drive screw 201 is axially locked and is rotatably arranged in the first piston cavity 110 or the second piston cavity 120; and the drive nut 202 is circumferentially locked and axially and movably sleeves the drive screw 201, and the drive nut 202 is used to abut against and drive the brake pad 2 to move, such that the brake pad 2 abuts against a brake disk 1000.

Firstly, the lead screw nut assembly typically has high linear positioning precision, and can be adjusted at a high level of precision. Thus, when the lead screw nut assembly is used in the braking caliper, a position of the brake pad 2 can be accurately controlled. Thus, an accurate and stable braking effect is achieved.

Secondly, the lead screw nut assembly includes the drive screw 201 and the drive nut 202. Such a combination can effectively transfer power by converting rotation motion of a thread into linear motion. The drive screw 201 extends in the first direction A and is in transmission connection with the first speed reduction mechanism 33 or the second speed reduction mechanism 34. This means that the rotation motion of the driving portion 31 (for example, a rotating motor) is converted into rotation of the drive screw 201 after speed reduction, and is further converted into the linear motion of the drive nut 202. Thus, noise is reduced while transmission efficiency is improved.

Optionally, with reference to FIG. 7, the drive screw 201 includes a smooth rod section 2011, a stop flange 2012, a screw section 2013 and a connecting gear 2014. The smooth rod section 2011 and the screw section 2013 extend in the first direction A, and the stop flange 2012 is connected between the smooth rod section 2011 and the screw section 2013. The drive nut 202 sleeves the screw section 2013, and is used to abut against the stop flange 2012. The connecting gear 2014 is connected to one end of the smooth rod section 2011 farther away from the stop flange 2012, and is used for transmission connection with the first speed reduction mechanism 33 or the second speed reduction mechanism 34.

In this embodiment, both the smooth rod section 2011 and the screw section 2013 extend in the first direction A. With such a design, consistency of the drive screw 201 in an axial direction is ensured, and it is advantageously ensured that no additional radial force is generated during transmission. Thus, wear is reduced, and life of the system is prolonged.

The stop flange 2012 is connected between the smooth rod section 2011 and the screw section 2013. The stop flange 2012 provides a limiting function for the drive nut 202. When the drive nut 202 moves along the screw section 2013 to a position of the stop flange 2012, the stop flange 2012 limits further motion of the drive nut. Thus, it is ensured that the drive nut 202 can accurately make contact with the brake pad 2 and generate a braking effect when the drive nut is at a predetermined position. Moreover, the stop flange 2012 can further prevent the drive nut 202 from being separated from the screw section 2013.

The connecting gear 2014 is connected to one end of the smooth rod section 2011 farther away from the stop flange 2012 and is used for transmission connection with the first speed reduction mechanism 33 or the second speed reduction mechanism 34. With such a design, rotation motion from an electric motor can be transferred to the connecting gear 2014 after a speed of the rotation motion from the electric motor is reduced through the first speed reduction mechanism 33 or the second speed reduction mechanism 34, and finally drives the drive screw 201 to rotate. Through gear transmission, torque output of the driving portion 31 (for example, a rotating motor) can be effectively amplified, and the speed is reduced to ensure that the drive nut 202 is pushed to achieve braking through a sufficient force.

In some embodiments, with reference to FIG. 8, the lead screw nut assembly further includes a piston sleeve 203. The piston sleeve 203 is connected to the drive nut 202, and the piston sleeve 203 is used to abut against the brake pad 2.

Firstly, the piston sleeve 203 is used to abut against the brake pad 2. Such a design has the advantage that the piston sleeve can provide a large contact surface to uniformly distribute a thrust of the drive nut 202 to the brake pad 2. Thus, it is ensured that the brake pad 2 can smoothly make contact with a braking surface to achieve an effective braking effect.

Secondly, the drive nut 202 can be protected from direct wear by introducing the piston sleeve 203 as an intermediate member, and the piston sleeve 203 acts as a buffer area between the drive nut 202 and the brake pad 2. Thus, service life of the drive nut 202 can be prolonged, and a maintenance frequency and cost can be reduced.

Moreover, since the piston sleeve 203 makes direct contact with the brake pad 2, selection of a shape and a material of the piston sleeve 203 can be optimized according to actual braking requirements to ensure that stable performance can be provided under different temperature and pressure conditions, which is not limited in the present invention.

Moreover, in order to improve sealing performance of the piston assemblies, a sealing ring 2031 may be arranged at an end portion of the piston sleeve 203.

In other variant implementations, the above piston sleeve 203 and the above drive nut 202 may be constructed as an integrated structure, which is not limited in the present invention.

In terms of selection of connection modes of the piston sleeve 203 and the drive nut 202, the present invention provides the following connection modes:
1) The piston sleeve 203 has a diameter greater than that of the drive nut 202, the piston sleeve 203 sleeves the drive nut 202, the piston sleeve is in interference fit with the drive nut. A first spherical surface is formed on an end surface of the drive nut 202, a second spherical surface is formed on an inner wall of the piston sleeve 203, and the first spherical surface is in spherical fit with the second spherical surface.
2) The piston sleeve 203 has a diameter greater than that of the drive nut 202, the piston sleeve 203 sleeves the drive nut 202, the piston sleeve and the drive nut are detachably connected in a clamped manner or in a threaded connection manner, a first spherical surface is formed at an end surface of the drive nut 202, a second spherical surface is formed on an inner wall of the piston sleeve 203, and the first spherical surface is in spherical fit with the second spherical surface.
3) The piston sleeve 203 may have a diameter equal to or less than that of the drive nut 202, the piston sleeve 203 does not sleeve the drive nut 202, but the piston sleeve 203 and the drive nut 202 are arranged side by side, and the piston sleeve 203 is connected to the drive nut 202 through a spherical hinge.

In the above three connection modes, whether the piston sleeve 203 and the drive nut 202 are fitted through two spherical surfaces or through a spherical hinge, the piston sleeve 203 can be offset by an angle to some extent under the condition that the brake pad 2 is worn, such that the piston sleeve 203 can vertically apply a braking force to the brake pad 2.

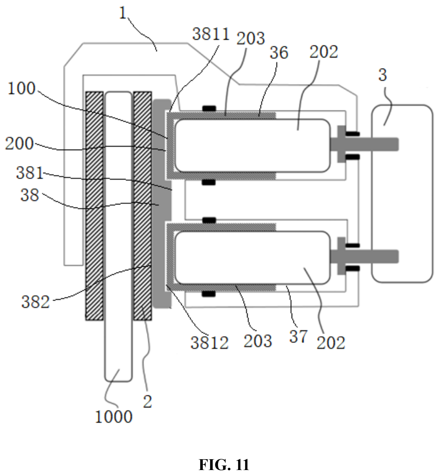

Optionally, with reference to FIG. 11, the driving module 3 further includes an adapter plate 38. The adapter plate 38 is arranged between the brake pad 2 and the first piston assembly 36 and the second piston assembly 37. An area in which the adapter plate 38 abuts against the brake pad 2 is a first area, a total area in which the first piston assembly 36 and the second piston assembly 37 abut against the adapter plate 38 is a second area, and the first area is greater than the second area.

In the implementation, pressure from the first piston assembly 36 and the second piston assembly 37 can be more uniformly distributed on the brake pad 2 since an area in which the adapter plate 38 makes contact with the brake pad 2 is large. Thus, excessively large local pressure on the brake pad 2 is reduced advantageously, and uneven wear or damage to the brake pad 2 caused by pressure concentration is avoided. Thus, service life of the brake pad 2 is prolonged.

Moreover, the large contact area means that the brake pad 2 can generate a large friction force under the same piston thrust, and thus the braking effect is improved. Moreover, uniform pressure distribution is advantageous to maintain excellent braking stability and responsiveness.

With reference to FIG. 11, the adapter plate 38 includes a first side surface 381 and a second side surface 382 facing away from each other in the first direction A. A first recess 3811 and a second recess 3812 are provided on the first side surface 381 in a recessed manner, the first recess 3811 is used to allow the first piston assembly 36 to be inserted, and the second recess 3812 is used to allow the second piston assembly 37 to be inserted. The first side surface 381 is fixedly connected to the first piston assembly 36 and/or the second piston assembly 37, or the second side surface 382 is fixedly connected to the brake pad 2.

In the implementation, the first recess 3811 and the second recess 3812 are used to insert the first piston assembly 36 and the second piston assembly 37 respectively. The piston assemblies can be accurately positioned on the adapter plate 38 through such a design. Thus, consistency and stability are maintained, and further, a mounting error is reduced advantageously.

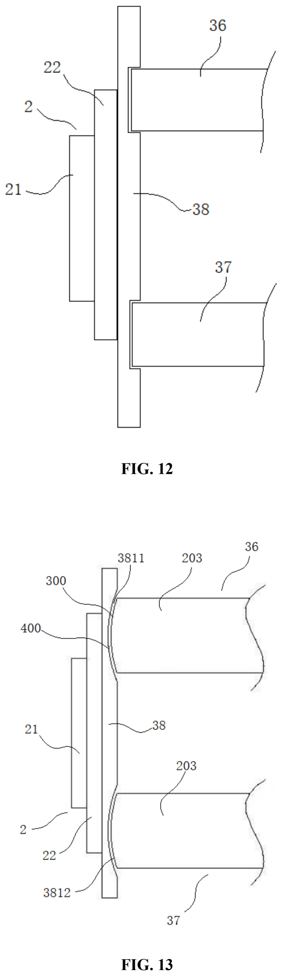

Moreover, for connection of the adapter plate 38, in an implementation, the adapter plate 38 may be connected to the brake pad 2. Specifically, with reference to schematic sketches of FIGs. 12 and 13, the brake pad 2 may include a brake pad body 21 and a metal backing plate 22. The metal backing plate 22 is connected to the brake pad body 21, and the adapter plate 38 is connected to the metal backing plate 22.

In another implementation, the adapter plate 38 may be connected to the first piston assembly 36 and/or the second piston assembly 37, which is not limited in the present invention.

Optionally, with reference to FIGs. 11 and 12, a first plane 100 is formed at an end portion of a piston sleeve 203 of the first piston assembly 36 and/or the second piston assembly 37, a second plane 200 is formed on an inner wall of the first recess 3811 and/or the second recess 3812, and the first plane 100 is used to abut against the second plane 200.

The first plane 100 is used to abut against the second plane 200. Such a structural design ensures that the piston sleeve 203 abuts against the adapter plate 38 more firmly and accurately. Through a plane-to-plane contact mode, a large contact area can be provided, a force can be further dispersed, local wear is reduced, and overall life is prolonged.

In another implementation, with reference to FIG. 13, a first cambered surface 300 is formed at an end portion of a piston sleeve 203 of the first piston assembly 36 and/or the second piston assembly 37, a second cambered surface 400 is formed on an inner wall of the first recess 3811 and/or the second recess 3812, and the first cambered surface 300 is used to abut against the second cambered surface 400.

Low parallelism of the two piston assemblies can be effectively avoided by making the first cambered surface 300 abut against the second cambered surface 400.

Specifically, a large contact area is provided through a design of cambered surfaces. Even if the parallelism between the piston sleeve 203 and the adapter plate 38 is low, contact between the cambered surfaces can still ensure proper guidance of the piston assemblies. The cambered surfaces can provide multi-point contact. Even if one of points deviates from an ideal position, other points can still maintain stability of abutment.

Moreover, contact between the first cambered surface 300 and the second cambered surface 400 may allow angular deviation within a range to some extent. Thus, even if a slight error exists in an assembly or manufacturing process, the piston assemblies can still operate smoothly. Such a design can help the system to be automatically adjusted to an optimal operation state, and reduce wear caused by low parallelism.

Moreover, with reference to FIG. 10, the driving module 3 further includes a module housing 39. The module housing 39 is detachably arranged on the caliper body 1, and the transmission mechanism 32, the first speed reduction mechanism 33 and the second speed reduction mechanism 34 are arranged in the module housing 39. By arranging the module housing 39, the transmission mechanism 32, the first speed reduction mechanism 33 and the second speed reduction mechanism 34 are effectively protected, and service life is prolonged. Moreover, for a mounting mode of the module housing 39, the module housing may be detachably connected to the caliper body 1 through a bolt or a screw, which is not limited in the present invention.

Optionally, with reference to FIGs. 9 and 10, a first piston cavity 110 penetrated through in the first direction A is provided inside the caliper body 1, and the first piston assembly 36 is arranged in the first piston cavity 110. A second piston cavity 120 penetrated through in the first direction A is provided inside the caliper body 1, and the second piston assembly 37 is arranged in the second piston cavity 120. An accommodating recess 13 is provided in the caliper body 1 in a recessed manner, and the driving portion 31 is arranged in the accommodating recess 13.

A first opening 391, a second opening 392 and a third opening 393 are formed in the module housing 39, the first opening 391 is provided opposite the accommodating recess 13 in the first direction A, the second opening 392 is provided opposite the first piston cavity 110 in the first direction A, and the third opening 393 is provided opposite the second piston cavity 120 in the first direction A.

In the implementation, the first opening 391 is provided opposite the accommodating recess 13 in the first direction A, and thus operation of the driving portion 31 can be performed without hindrance. The second opening 392 is provided opposite the first piston cavity 110 in the first direction A, and thus it is ensured that the first piston assembly 36 can smoothly receive power from the driving portion 31. The third opening 393 is provided opposite the second piston cavity 120 in the first direction A, and thus it is ensured that the second piston assembly 37 can smoothly receive the power from the driving portion 31.

In a second aspect of the present invention, a braking system is further provided. The braking system includes the above electronic mechanical braking caliper. For example, the braking system further includes a controller. The controller is electrically connected to a driving portion 31, thus increasing a speed of response.

In a third aspect of the present invention, in addition, a vehicle is further provided. The vehicle includes the above electronic mechanical braking caliper and the above braking system.

## Claims

1. An electronic mechanical braking caliper, comprising:
a caliper body (1);
a brake pad (2) arranged on the caliper body (1); and
a driving module (3) arranged on the caliper body (1), wherein
the driving module (3) comprises one driving portion (31), a transmission mechanism (32), a first speed reduction mechanism (33), a second speed reduction mechanism (34), a first piston assembly (36) and a second piston assembly (37);
the driving portion (31) is in transmission connection with the first speed reduction mechanism (33) and the second speed reduction mechanism (34) through the transmission mechanism (32), the first speed reduction mechanism (33) is in transmission connection with the first piston assembly (36), and the second speed reduction mechanism (34) is in transmission connection with the second piston assembly (37); and
the first piston assembly (36) and the second piston assembly (37) move in a first direction (A) to abut against the brake pad (2) and drive the brake pad (2) to move.

2. The electronic mechanical braking caliper according to claim 1, wherein the driving module (3) further comprises a synchronization mechanism (35), and the synchronization mechanism (35) is arranged between the first speed reduction mechanism (33) and the second speed reduction mechanism (34) in a transmitting manner.

3. The electronic mechanical braking caliper according to claim 1 or claim 2, wherein the transmission mechanism (32) comprises a first input gear (321), a first intermediate gear (322) and a second intermediate gear (323),
the first input gear (321) is in transmission connection with the driving portion (31), and the first intermediate gear (322) and the second intermediate gear (323) are in transmission connection with the first input gear (321); and
the first intermediate gear (322) is in transmission connection with the first speed reduction mechanism (33), and the second intermediate gear (323) is in transmission connection with the second speed reduction mechanism (34).

4. The electronic mechanical braking caliper according to claim 3, wherein the first speed reduction mechanism (33) comprises a first output gear (331) and a first planetary gear assembly (332) which are in transmission connection with each other, the first output gear (331) is in transmission connection with the first intermediate gear (322), and the planetary gear assembly (332) is in transmission connection with the first piston assembly (36); and/or
the second speed reduction mechanism (34) comprises a second output gear (341) and a second planetary gear assembly (342) which are in transmission connection with each other, the second output gear (341) is in transmission connection with the second intermediate gear (323), and the second planetary gear assembly (342) is in transmission connection with the second piston assembly (37).

5. The electronic mechanical braking caliper according to claim 4, wherein the first output gear (331) and the second output gear (341) have a diameter of a first size, and the first intermediate gear (322) and the second intermediate gear (323) have a diameter of a second size; wherein the first size is greater than the second size.

6. The electronic mechanical braking caliper according to claim 4 or claim 5, wherein the first planetary gear assembly (332) and/or the second planetary gear assembly (342) comprise/comprises a sun gear (101), a planetary gear (102), a ring gear (103) and a planetary carrier (104); and
the sun gear (101) is in transmission connection with the first output gear (331) or the second output gear (341), the planetary gear (102) is arranged on the planetary carrier (104) and is in transmission connection with the sun gear (101), the ring gear (103) is fixedly arranged and meshes with the planetary gear (102), and the planetary carrier (104) is in transmission connection with the first piston assembly (36) or the second piston assembly (37);
optionally, wherein the planetary carrier (104) is configured as a disk plate, and the disk plate is rotatably arranged in the ring gear (103);
the disk plate comprises a disk plate body (1041) and a planetary gear shaft (1042), the planetary gear shaft (1042) is arranged on the disk plate body (1041), and the planetary gear (102) rotatably sleeves the planetary gear shaft (1042); and
a gear hole (1043) is in a center of the disk plate, and the gear hole (1043) is in transmission connection with the first piston assembly (36) or the second piston assembly (37).

7. The electronic mechanical braking caliper according to any one of claims 1-6, wherein the caliper body (1) is provided with a first beam body (11) and a second beam body (12), the first beam body (11) and the second beam body (12) extend in the first direction (A) and are spaced in a second direction (B), an accommodating recess (13) is provided between the first beam body (11) and the second beam body (12), and the driving portion (31) is arranged in the accommodating recess (13);
a first piston cavity (110) penetrated through in the first direction (A) is provided inside the first beam body (11), the first piston assembly (36) is arranged in the first piston cavity (110), a second piston cavity (120) penetrated through in the first direction (A) is provided inside the second beam body (12), and the second piston assembly (37) is arranged in the second piston cavity (120); and
wherein the first direction (A) intersects with the second direction (B);
optionally, wherein the caliper body (1) is further provided with a first hollow groove (14) and a second hollow groove (15);
the first hollow groove (14) is on one side of the first beam body (11) farther away from the accommodating recess (13) in the second direction (B), and the second hollow groove (15) is on one side of the second beam body (12) farther away from the accommodating recess (13) in the second direction (B); and
wherein the first beam body (11) and the second beam body (12) are symmetrically arranged in the second direction (B), and the first hollow groove (14) and the second hollow groove (15) are symmetrically arranged in the second direction (B).

8. The electronic mechanical braking caliper according to any one of claims 1-7, wherein the first piston assembly (36) and/or the second piston assembly (37) comprise/comprises a lead screw nut assembly, and the lead screw nut assembly comprises a drive screw (201) and a drive nut (202);
the drive screw (201) extends in the first direction (A) and is in transmission connection with the first speed reduction mechanism (33) or the second speed reduction mechanism (34), and the drive screw (201) is axially locked and is circumferentially rotatable; and
the drive nut (202) is circumferentially locked and axially and movably sleeves the drive screw (201), and the drive nut (202) is used to abut against the brake pad (2) and drive the brake pad (2) to move.

9. The electronic mechanical braking caliper according to claim 8, wherein the lead screw nut assembly further comprises a piston sleeve (203), the piston sleeve (203) is connected to the drive nut (202), and the piston sleeve (203) is used to abut against the brake pad (2); and
wherein the piston sleeve (203) and the drive nut (202) are integrally formed; or
the piston sleeve (203) sleeves the drive nut (202), a first spherical surface is on an end surface of the drive nut (202), a second spherical surface is on an inner wall of the piston sleeve (203), and the first spherical surface is in spherical fit with the second spherical surface; or
the piston sleeve (203) is on one side of the drive nut (202) in the first direction (A), and the piston sleeve (203) is connected to the drive nut (202) through a spherical hinge;
optionally, wherein the drive screw (201) comprises a smooth rod section (2011), a stop flange (2012), a screw section (2013) and a connecting gear (2014);
the smooth rod section (2011) and the screw section (2013) extend in the first direction (A), and the stop flange (2012) is connected between the smooth rod section (2011) and the screw section (2013);
the drive nut (202) sleeves the screw section (2013), and is used to abut against the stop flange (2012); and
the connecting gear (2014) is connected to one end of the smooth rod section (2011) farther away from the stop flange (2012), and is used for transmission connection with the first speed reduction mechanism (33) or the second speed reduction mechanism (34).

10. The electronic mechanical braking caliper according to any one of claims 1-9, wherein the driving module (3) further comprises an adapter plate (38);
the adapter plate (38) is arranged between the brake pad (2) and the first piston assembly (36) and the second piston assembly (37); and
wherein an area in which the adapter plate (38) abuts against the brake pad (2) is a first area, a total area in which the first piston assembly (36) and the second piston assembly (37) abut against the adapter plate (38) is a second area, and the first area is greater than the second area.

11. The electronic mechanical braking caliper according to claim 10, wherein the adapter plate (38) comprises a first side surface (381) and a second side surface (382) facing away from each other in the first direction (A), a first recess (3811) and a second recess (3812) are on the first side surface (381) in a recessed manner, the first recess (3811) is used to allow the first piston assembly (36) to be inserted, and the second recess (3812) is used to allow the second piston assembly (37) to be inserted; and
wherein the first side surface (381) is fixedly connected to the first piston assembly (36) and/or the second piston assembly (37), or the second side surface (382) is fixedly connected to the brake pad (2).

12. The electronic mechanical braking caliper according to claim 11, wherein a first plane (100) is at an end portion of a piston sleeve (203) of the first piston assembly (36) and/or the second piston assembly (37), a second plane (200) is on an inner wall of the first recess (3811) and/or the second recess (3812), and the first plane (100) is used to abut against the second plane (200); or
wherein a first cambered surface (300) is at an end portion of a piston sleeve (203) of the first piston assembly (36) and/or the second piston assembly (37), a second cambered surface (400) is formed on an inner wall of the first recess (3811) and/or the second recess (3812), and the first cambered surface (300) is used to abut against the second cambered surface (400).

13. The electronic mechanical braking caliper according to any one of claims 1-12, wherein the driving module (3) further comprises a module housing (39), the module housing (39) is detachably arranged on the caliper body (1), and the transmission mechanism (32), the first speed reduction mechanism (33) and the second speed reduction mechanism (34) are arranged in the module housing (39);
optionally, wherein a first piston cavity (110) penetrated through in the first direction (A) is provided inside the caliper body (1), and the first piston assembly (36) is arranged in the first piston cavity (110);
a second piston cavity (120) penetrated through in the first direction (A) is provided inside the caliper body (1), and the second piston assembly (37) is arranged in the second piston cavity (120);
an accommodating recess (13) is provided in the caliper body (1) in a recessed manner, and the driving portion (31) is arranged in the accommodating recess (13); and
a first opening (391), a second opening (392) and a third opening (393) are in the module housing, the first opening (391) is provided opposite the accommodating recess (13) in the first direction (A), the second opening (392) is provided opposite the first piston cavity (110) in the first direction (A), and the third opening (393) is provided opposite the second piston cavity (120) in the first direction (A).

14. A braking system, comprising: the electronic mechanical braking caliper according to any one of claims 1-13.

15. A vehicle, comprising: the electronic mechanical braking caliper according to any one of claims 1-13 or the braking system according to claim 14.
